# FASCICULE DE BREVET EUROPEEN

(11) **EP 2 189 336 B1**
(45) Date de publication et mention de la délivrance du brevet: **25.07.2012**
(21) Numéro de dépôt: 09306131.5
(22) Date de dépôt: 24.11.2009
(51) Int. Cl.: B60R 19/18

(54) **Module de face avant de véhicule automobile comprenant un bouclier**
Frontplattenmodul eines Kraftfahrzeuges mit Schild
Front panel module of a motor vehicle comprising a shield

(30) Priorité: 24.11.2008 FR 0857945
(43) Date de publication de la demande: 26.05.2010
(73) Titulaire: Faurecia Bloc Avant, 92000 Nanterre (FR)
(72) Inventeur: Gonin, M. Vincent, 25600, SOCHAUX (FR)
(74) Mandataire: Jacobson, Claude

(56) Documents cités:
- WO-A-2008/061917
- WO-A-2008/107599
- WO-A-2008/110708
- DE-A1- 10 002 499

## Description

La présente invention concerne un module de face avant pour véhicule automobile du type destiné à être fixé sur des brancards et des prolonges de berceau du châssis du véhicule automobile, ledit module comprenant un cadre structurel en matériau plastique comprenant au moins une traverse inférieure et des montants verticaux, chacun desdits montants formant, sur au moins une partie de sa hauteur un élément déformable d'absorption d'énergie, le module comprenant en outre un bouclier en matériau plastique, conformé pour épouser la forme d'une peau de bouclier et disposé contre le cadre structurel, ledit bouclier comprenant une traverse supérieure et une traverse inférieure reliées entre elles par des poutres de liaison verticales.

Le document WO-2008/061917 décrit un bouclier destiné à être appliqué sur des brancards et des prolonges de berceau de châssis du véhicule automobile. La description du document WO couvre les caractéristiques du préambule de la revendication 1.

La présente invention concerne également un véhicule automobile comprenant un tel module de bouclier.

Les modules de face avant de véhicule automobile sont agencés pour répondre de façon convenable aux différents types de chocs contre le véhicule automobile, tel que les chocs « piéton » aux alentours de 40 km/h, les chocs « parking » aux alentours de 4 km/h (ECE42) et les chocs « réparabilité » aux alentours de 15 km/h (Danner) tout en réduisant les coûts de fabrication.

Afin d'assurer une absorption de l'énergie, un grand nombre d'éléments sont prévus pour répondre au mieux selon le type de choc subi par le véhicule. On prévoit par exemple un absorbeur de choc pour le choc piéton, sous la forme d'un élément déformable élastiquement agencé pour s'écraser en cas de collision avec un piéton, au moins une poutre transversale métallique pour le choc parking et des éléments déformables d'absorption d'énergie métalliques, ou « crashbox », pour les chocs réparabilité. Ce grand nombre d'éléments complexifie la réalisation du module de face avant et ajoute en outre un poids important sur le véhicule automobile, notamment du fait des éléments métalliques prévus.

Le but principal de l'invention est de proposer un module de face avant permettant une absorption de choc satisfaisante tout en réduisant le nombre d'éléments et pouvant être obtenu à faible coût et à masse réduite.

A cet effet, l'invention concerne un module de face avant du type précité, dans lequel les traverses supérieure et inférieure et les poutres de liaison comprennent une pluralité de nervures de sorte à former des alvéoles dans lesdites traverses et lesdites poutres, au moins une partie desdites alvéoles traversant le bouclier.

Un tel module de face avant permet de réduire grandement le nombre d'éléments formant le module et de se passer d'une poutre transversale métallique, ce qui réduit la masse du module. En outre, le module de face avant selon l'invention permet de répondre aux différents types de choc de façon satisfaisante.

Selon d'autres aspects du module de face avant :
- le module de face avant comprend en outre deux platines métalliques rigides, dont une face est destinée à s'appuyer sur des brancards et des prolonges de berceau du châssis du véhicule automobile, les montants verticaux du cadre structurel étant disposés contre l'autre face desdites platines ;
- le bouclier présente au moins une partie dont la section est de rigidité décroissante de sa face arrière disposée en regard du cadre structurel à sa face avant ;
- l'épaisseur des nervures est décroissante de la face arrière de la partie de rigidité décroissante à la face avant de ladite partie ;
- la traverse supérieure comprend au moins un logement ouvert sur la face avant du bouclier, un élément en mousse étant reçu dans ledit logement ;
- la face avant du bouclier est pourvue d'une pluralité de moyens de fixation permettant la fixation d'une peau de bouclier et/ou d'accessoires du véhicule automobile sur ledit bouclier ;
- le module de face avant comprend une peau de bouclier fixée sur la face avant du bouclier de sorte à recouvrir sensiblement celui-ci ;
- la peau de bouclier est formée d'une pluralité de panneaux fixés chacun sur la face avant du bouclier ;
- le bouclier est monobloc ; et
- les traverses supérieure et inférieure du bouclier comprennent au moins une partie faisant saillie vers l'avant par rapport aux poutres de liaison verticales.

L'invention concerne également un véhicule automobile comprenant un châssis pourvu de brancards et de prolonges de berceau, dans lequel un module de face avant tel que décrit ci-dessus est fixé auxdits brancards et auxdites prolonges de berceau.

D'autres aspects et avantages de l'invention apparaîtront à la lecture de la description qui suit, donnée à titre d'exemple et faite en référence aux dessins annexés, dans lesquels :
- la Fig. 1 est une représentation schématique en perspective éclatée d'un module de face avant selon l'invention,
- la Fig. 2 est une représentation schématique de côté du module de face avant de la Fig. 1,
- la Fig. 3 est une représentation schématique en perspective éclatée d'une partie d'un module de face avant selon l'invention pourvue d'une peau de bouclier,
- la Fig. 4 est une représentation schématique en coupe d'un bouclier d'un module de face avant selon un mode de réalisation de l'invention.

Dans la description, les termes « longitudinal », « transversal », « avant », « arrière », « horizontal » et « vertical » sont définis selon les directions usuelles d'un véhicule automobile monté.

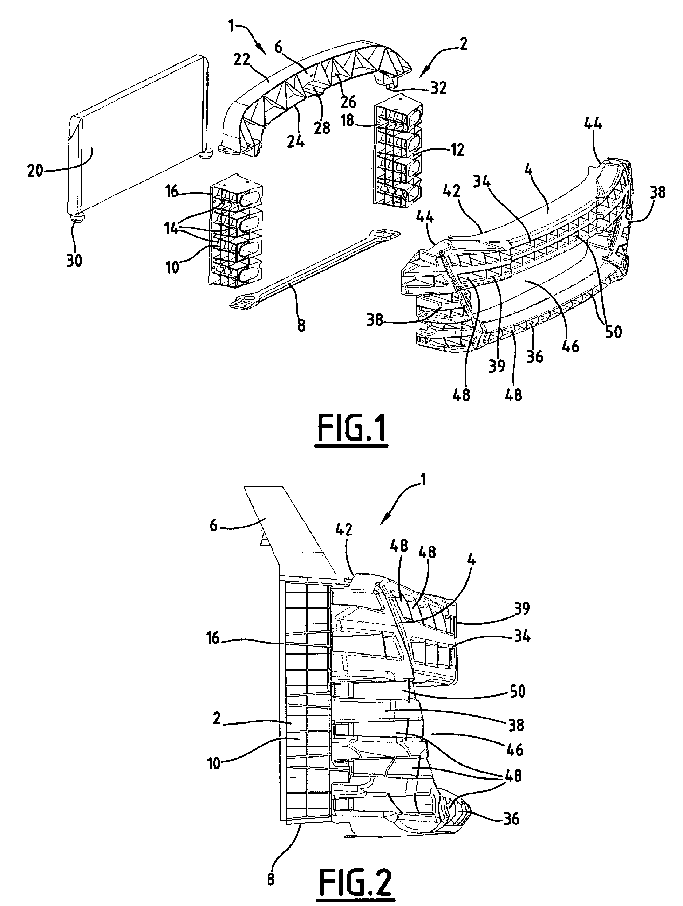

En référence à la Fig. 1, on décrit un module de face avant 1 comprenant essentiellement un cadre structurel 2 et un bouclier 4. Le module de face avant 1 est destiné à être fixé sur des brancards et des prolonges de berceau du châssis (non représenté) du véhicule automobile.

Le cadre structurel 2 participe à la rigidité de la caisse du véhicule. Il comprend une traverse supérieure 6, une traverse inférieure 8, et des montants verticaux droit 10 et gauche 12.

Le montant vertical droit 10, respectivement le montant vertical gauche 12, du cadre structurel 2 est constitué par une pluralité d'éléments déformables 14. Dans le mode de réalisation envisagé, quatre éléments déformables 14 sont superposés selon la direction verticale. Dans une variante de réalisation, un montant vertical est constitué par une rampe déformable continue. Un élément ou une rampe déformable est une structure sensiblement parallélépipédique apte à absorber, en s'écrasant selon son épaisseur, une fraction de l'énergie d'un choc.

La face arrière d'un montant vertical 10, 14 vient en appui sur l'essentiel de la surface d'une platine métallique 16, 18 étendue reliant, d'un même côté du véhicule, les extrémités d'une prolonge de berceau située à un niveau inférieur et d'un brancard situé à un niveau plus élevé.

La traverse inférieure 8 du cadre structurel 2 relie les deux éléments d'absorption 14 les plus bas de chacun des montants verticaux 10 et 12. La traverse inférieure 8 a une section de forme générale rectangulaire. La portion centrale de la traverse inférieure 8 est amincie selon la direction verticale, de sorte que sa face supérieure présente un logement de réception d'un ensemble de refroidissement, indiqué de manière générale par la référence 20. L'ensemble de refroidissement 20 comporte par exemple un groupe motoventilateur et un radiateur.

La traverse supérieure 6 du cadre structurel 2 relie les deux éléments déformables 14 les plus hauts des montants verticaux droit 10 et gauche 12. La traverse supérieure 6 est de forme générale en arche. La traverse supérieure 6, en tant que poutre à treillis, comporte une membrure supérieure 22 et une membrure inférieure 24 reliées entre elles par des nervures de renfort 26. Les nervures de renfort sont disposées de manière à former des caissons intérieurs triangulaires. La section de la traverse supérieure 6, dans le plan vertical médian, présente une forme en losange, avec un côté supérieur disposé essentiellement horizontalement et correspondant à la membrure supérieure 22, un côté inférieur correspondant à la membrure inférieure 24, et des côtés avant et arrière inclinés vers le haut et vers l'arrière du véhicule. La traverse supérieure 6 sort ainsi vers l'arrière du plan vertical défini par la traverse inférieure 8 et les montants verticaux 10 et 12.

La membrure supérieure 22 de la traverse supérieure 6 est adaptée pour coopérer avec un élément de carrosserie du véhicule et en particulier avec un capot de celui-ci. Une face intérieure du capot, orientée vers l'intérieur du véhicule, vient en appui sur la membrure supérieure 22, qui est conformée à cet effet.

Une portion médiane de la traverse supérieure 6 présente un logement 28 de réception de moyens de fermeture du capot destinés à coopérer avec des moyens de fermeture conjugués prévus sur le capot.

Des moyens de maintien de l'ensemble de refroidissement 20 sont prévus sur la membrure inférieure 24 de la traverse supérieure 6. Dans un mode de réalisation particulièrement avantageux du module de face avant, le bord inférieur de l'ensemble de refroidissement 20 est relié à la traverse inférieure 8 par des languettes de fixation 30, tandis que le bord supérieur du radiateur 20 est relié par des languettes de fixation 32 à la traverse supérieure 6.

Le cadre structurel 2 monobloc est de préférence réalisé en une matière plastique, par exemple par injection d'un thermoplastique. Les traverses supérieure 6 et inférieure 8 et les montants verticaux 10 et 12 sont venus de matière. En variante, la traverse inférieure 8 et les montants verticaux 10 et 12 sont venus de matière pour former une pièce en « U », puis la traverse supérieure 6 est fixée, par exemple par collage, sur la partie supérieure des montants verticaux 10, 12. Dans encore une autre variante et selon le mode de réalisation représenté sur la Fig. 1, les montants verticaux 10, 12 sont moulés puis fixés à la traverse inférieure 8, par exemple par collage, pour former une pièce en « U », sur laquelle on vient ensuite fixer la traverse supérieure 6.

Le bouclier 4 est disposé contre le cadre structurel 2 vers l'avant de celui-ci. Ce bouclier 4 est par exemple une pièce monobloc réalisée en matière plastique. Le bouclier 4 comprend une traverse supérieure 34 et une traverse inférieure 36 reliées entre elles à chacune de leurs extrémités par une poutre de liaison sensiblement verticale 38.

La forme générale du bouclier 4 est conformée pour épouser la forme d'une peau de bouclier décrite ultérieurement et destinée à être fixée sur la face avant 39 du bouclier 4. Le bouclier 4 est destiné à s'étendre sur toute la largeur de la face avant du véhicule automobile d'une aile à l'autre dudit véhicule.

La traverse supérieure 34 est disposée sensiblement au droit des éléments d'absorption 14 les plus haut des montants 10 et 12 du cadre 2 et s'étend entre ces éléments 14. La traverse supérieure 34 comprend en outre des parties extrêmes 40 s'étendant au-delà des poutres de liaison 38 de part et d'autre du bouclier.

La traverse inférieure 36 est disposée sensiblement au droit des éléments d'absorption 14 les plus bas des montants 10 et 12 du cadre 2 et s'étend entre ces éléments 14.

La face arrière 42 du bouclier 4 comprend des logements 44 de réception des montants 10 et 12, les logements 44 étant disposés sensiblement derrière les poutres de liaison verticales 38.

Les traverses supérieure 34 et inférieure 36 présentent une forme galbée vers l'avant. Ainsi, ces traverses 34 et 36 présentent une partie en saillie vers l'avant par rapport aux poutres de liaison 38. Une ouverture centrale 46 est prévue entre les traverses 34 et 36 et les poutres de liaison 38 de sorte à laisser passer l'air vers le châssis du véhicule automobile.

Les traverses supérieure 34 et inférieure 36 et les poutres de liaison 38 comprennent chacune une pluralité de nervures 48 agencées pour former des alvéoles 50 s'étendant entre la face avant 39 et la face arrière 42 du bouclier 4. Au moins une partie de ces alvéoles traversent le bouclier 4 et laisse passer l'air de l'avant vers l'arrière du bouclier 4. De telles alvéoles permettent d'alléger le bouclier 4 et d'augmenter son inertie.

Afin d'améliorer le comportement du bouclier 4 en cas de choc, le bouclier 4 présente au moins une partie dont la section est de rigidité décroissante de la face arrière de cette partie disposée en regard du cadre structurel 2 à la face avant de cette partie. Ainsi, la partie de bouclier présente une rigidité plus importante de son côté arrière que de son côté avant.

Une telle évolution de la rigidité est obtenue, selon un premier mode de réalisation, en prévoyant une épaisseur décroissante des nervures 48 de l'arrière vers l'avant. Les nervures 48 étant plus épaisse vers l'arrière, la rigidité du bouclier est augmentée, tandis qu'elle est réduite à l'endroit où les nervures 48 sont moins épaisses.

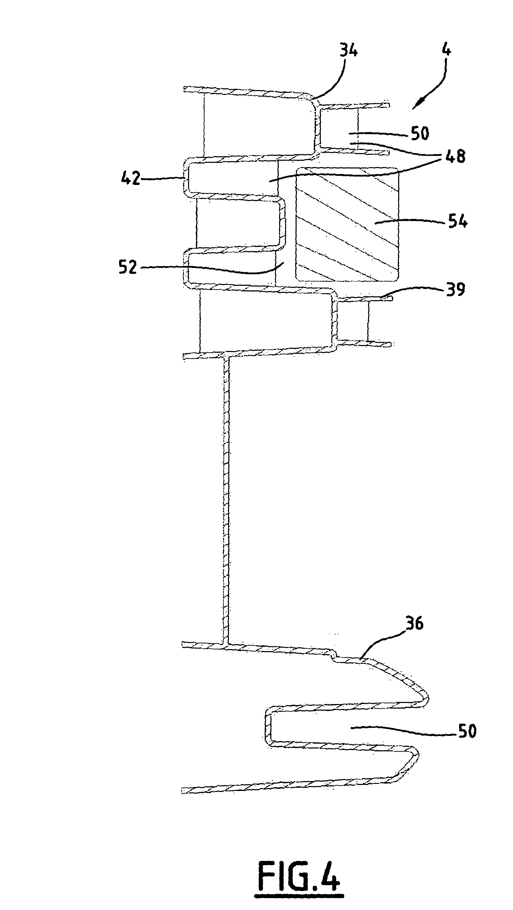

Selon un autre mode de réalisation, la partie de bouclier 4 de rigidité réduite comprend un logement 52 de réception d'un élément en mousse 54, par exemple du polypropylène expansé ou autre. Cet élément en mousse 54 est par exemple reçu dans des alvéoles 50 choisies et disposées dans la partie dont la rigidité est réduite. Selon le mode de réalisation représenté sur la Fig. 4, la traverse supérieure 34 est pourvue d'un logement transversal 52 recevant un élément en mousse 54. Ce logement 52 est ouvert vers l'avant de sorte que l'élément en mousse 54 est disposé directement derrière la peau de bouclier.

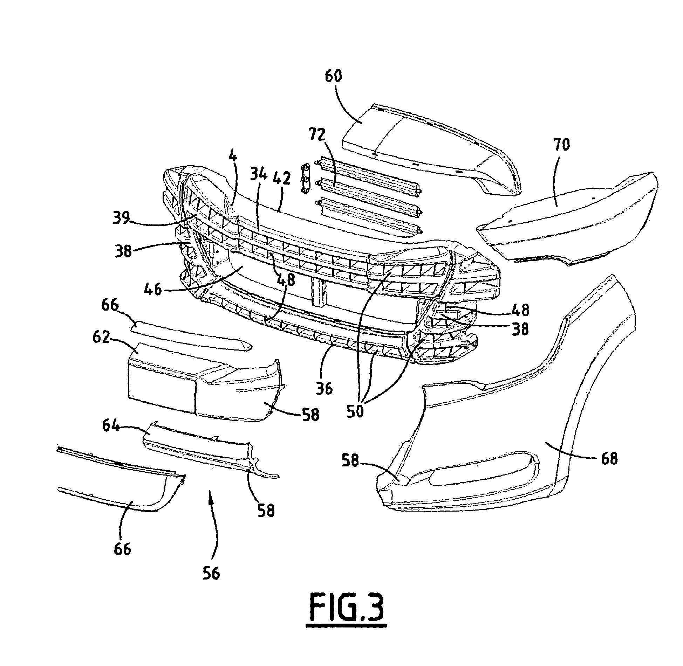

Une peau de bouclier 56 est fixée sur la face avant du bouclier 4 de sorte à recouvrir sensiblement celui-ci et à conférer un aspect esthétique satisfaisant à l'avant du véhicule automobile. Selon l'invention, la peau de bouclier 56 est réalisée en une pluralité de panneaux 58 conformés pour former la peau 56, comme représenté sur la Fig. 3. Ces panneaux 58 sont de faible épaisseur, par exemple sensiblement comprise entre 1.5 mm et 3 mm, ce qui réduit la masse et l'encombrement de la peau 56. Une telle épaisseur peut être prévue car la peau de bouclier 56 ne remplit pas de fonction structurelle dans l'absorption des chocs, cette fonction étant remplie par le bouclier 4 et le cadre structurel 2. La peau 56 n'a donc qu'une fonction esthétique, ce qui permet de réduire son épaisseur afin de réduire sa masse et son coût de fabrication.

La peau 56 comprend par exemple un plastron 60, un bandeau de protection supérieur 62, un bandeau de protection inférieur 64, des accessoires de décoration 66 (tel qu'un jonc chromé), des crosses de bouclier 68.

La face avant du bouclier 4 reçoit en outre des accessoires fonctionnels du véhicule automobile, tel que les blocs optiques 70, un grille d'aération (non représentée) reçue dans l'ouverture 46 et éventuellement des volets pilotés 72 disposés derrière la grille et permettant de guider l'air de façon optimale.

Afin d'assurer la fixation de ces divers éléments, la face avant 39 du bouclier 4 est pourvue d'une pluralité de moyens de fixation permettant la fixation des panneaux 58 de la peau de bouclier 56 et des accessoires du véhicule automobile. Ces moyens de fixation sont par exemple formés par des gorges et des orifices de réception d'éléments de fixation complémentaires prévus sur les panneaux 58 et sur les accessoires du véhicule automobile, ce qui permet le montage et le démontage des panneaux et des accessoires à volonté. Ces éléments de fixation sont par exemple venus de matière avec les panneaux 58.

Le module de face avant décrit ci-dessus permet de répondre aux chocs sur le véhicule automobile de façon satisfaisante en allégeant et en simplifiant ce module.

En cas de choc piéton, la traverse supérieure 34 est flexible sensiblement en son centre du fait de sa forme galbée, ce qui limite le pic d'accélération transmis à la jambe, tandis que la large étendue verticale de cette traverse 34 réduit la flexion au niveau du genou.

En cas de choc parking, la déformation élastique du bouclier 4 dissipe l'intégralité de l'énergie du choc sans déformation résiduelle, c'est-à-dire que le bouclier conserve sa forme initiale après le choc.

En cas de choc de réparabilité (Danner), les éléments déformables d'absorption d'énergie 14 absorbent la majeure partie de l'énergie. Le bouclier 4 participe également à cette absorption car celui-ci se déforme plastiquement en cas de choc Danner et participe activement à la dissipation d'énergie, notamment par la ruine de ses poutres de liaison 38 et des parties latérales des traverses supérieure 34 et inférieure 36.

Ainsi, le module de face avant permet de répondre aux chocs de manière satisfaisante sans nécessiter la présence d'une traverse métallique ou d'éléments d'absorption métalliques qui augmentent considérablement le poids du module.

Le bouclier 4 est particulièrement simple à réaliser et n'a pas besoin d'une finition très précise, étant donné qu'il est recouvert par une peau de bouclier 56. On réalise ainsi des économies lors de la fabrication du bouclier 4.

En outre, du fait que la peau 56 ne présente aucune fonction structurelle, son épaisseur peut être réduite, ce qui l'allège et lui confère un aspect esthétique plus agréable. Le fait de prévoir une pluralité de panneaux 58 permet de conférer l'aspect souhaité à la face avant en sélectionnant les panneaux selon les exigences du conducteur. Ainsi, la peau 56 peut par exemple être montée chez le concessionnaire en fonction des souhaits de son client, ce qui permet de personnaliser le véhicule automobile.

Le bouclier 4 permet en outre d'assurer un guidage aéraulique et une étanchéité aéraulique par rapport aux organes mécaniques du véhicule, ce qui permet de réduire la traînée.

## Revendications

1. Module de face avant (1) pour véhicule automobile du type destiné à être fixé sur des brancards et des prolonges de berceau du châssis du véhicule automobile, ledit module comprenant un cadre structurel (2) en matériau plastique comprenant au moins une traverse inférieure (8) et des montants verticaux (10, 12), chacun desdits montants (10, 12) formant, sur au moins une partie de sa hauteur un élément déformable d'absorption d'énergie (14), le module comprenant en outre un bouclier (4) en matériau plastique, conformé pour épouser la forme d'une peau de bouclier (56) et disposé contre le cadre structurel (2), ledit bouclier (4) comprenant une traverse supérieure (34) et une traverse inférieure (36) reliées entre elles par des poutres de liaison verticales (38), **caractérisé en ce que** les traverses supérieure (34) et inférieure (36) et les poutres de liaison (38) comprennent une pluralité de nervures (48) de sorte à former des alvéoles (50) dans lesdites traverses (34, 36) et lesdites poutres (38), au moins une partie desdites alvéoles (50) traversant le bouclier (4).

2. Module de face avant selon la revendication 1, **caractérisé en ce qu'**il comprend en outre deux platines métalliques (16) rigides, dont une face est destinée à s'appuyer sur des brancards et des prolonges de berceau du châssis du véhicule automobile, les montants verticaux (10, 12) du cadre structurel (2) étant disposés contre l'autre face desdites platines (16).

3. Module de face avant selon la revendication 1 ou 2, **caractérisé en ce que** le bouclier (4) présente au moins une partie dont la section est de rigidité décroissante de sa face arrière disposée en regard du cadre structurel (2) à sa face avant.

4. Module de face avant selon la revendication 3, **caractérisé en ce que** l'épaisseur des nervures (48) est décroissante de la face arrière de la partie de rigidité décroissante à la face avant de ladite partie.

5. Module de face avant selon l'une quelconque des revendications 1 à 4, **caractérisé en ce que** la traverse supérieure (34) comprend au moins un logement (52) ouvert sur la face avant (39) du bouclier (4), un élément en mousse (54) étant reçu dans ledit logement (52).

6. Module de face avant selon l'une quelconque des revendications 1 à 5, **caractérisé en ce que** la face avant (39) du bouclier (4) est pourvue d'une pluralité de moyens de fixation permettant la fixation d'une peau de bouclier (56) et/ou d'accessoires du véhicule automobile sur ledit bouclier (4).

7. Module de face avant selon l'une quelconque des revendications 1 à 6, **caractérisé en ce qu'**il comprend une peau de bouclier (56) fixée sur la face avant (39) du bouclier (4) de sorte à recouvrir sensiblement celui-ci.

8. Module de face avant selon la revendication 7, **caractérisé en ce que** la peau de bouclier (56) est formée d'une pluralité de panneaux (58) fixés chacun sur la face avant (39) du bouclier (4).

9. Module de face avant selon l'une quelconque des revendications 1 à 8, **caractérisé en ce que** le bouclier (4) est monobloc.

10. Module de face avant selon l'une quelconque des revendications 1 à 9, **caractérisé en ce que** les traverses supérieure (34) et inférieure (36) du bouclier (4) comprennent au moins une partie faisant saillie vers l'avant par rapport aux poutres de liaison verticales (38).

11. Véhicule automobile comprenant un châssis pourvu de brancards et de prolonges de berceau, **caractérisé en ce qu'**un module de face avant selon l'une quelconque des revendications 1 à 10 est fixé auxdits brancards et auxdites prolonges de berceau.

## Claims

1. Motor vehicle front-end panel assembly (1) of the type fixed to side struts and cradle extensions of a motor vehicle chassis, said assembly comprising a plastics material structural frame (2) having at least one lower cross member (8) and vertical struts (10, 12), each of said struts (10, 12) forming, over at least a portion of its height, a deformable energy absorption component (14), the assembly further comprising a plastics material shield (4) formed so as to match the shape of a shield skin (56) and arranged against the structural frame (2), said shield (4) comprising an upper cross member (34) and a lower cross member (36) interconnected via vertical connecting beams (38), **characterised in that** the upper (34) and lower (36) cross members and the connecting beams (38) comprise a plurality of ribs (48) which form cells (50) in said cross members (34, 36) and said beams (38), at least some of said cells (50) passing through the shield (4).

2. Front-end panel assembly according to claim 1, **characterised in that** it further comprises two rigid metal plates (16), of which one face is pressed onto side struts and cradle extensions of the motor vehicle chassis, the vertical struts (10, 12) of the structural frame (2) being arranged against the other face of said plates (16).

3. Front-end panel assembly according to either claim 1 or claim 2, **characterised in that** the shield (4) has at least one portion of which the cross-section decreases in rigidity from its rear face arranged facing the structural frame (2) to its front face.

4. Front-end panel assembly according to claim 3, **characterised in that** the ribs (48) decrease in thickness from the rear face of the portion decreasing in rigidity to the front face of said portion.

5. Front-end panel assembly according to any one of claims 1 to 4, **characterised in that** the upper cross member (34) comprises at least one recess (52) which opens onto the front face (39) of the shield (4), a foam component (54) being received in said recess (52).

6. Front-end panel assembly according to any one of claims 1 to 5, **characterised in that** the front face (39) of the shield (4) is equipped with a plurality of fixing means enabling a shield skin (56) and/or motor vehicle accessories to be fixed to said shield (4).

7. Front-end panel assembly according to any one of claims 1 to 6, **characterised in that** it comprises a shield skin (56) fixed to the front face (39) of the shield (4) so as to substantially cover said shield.

8. Front-end panel assembly according to claim 7, **characterised in that** the shield skin (56) is formed of a plurality of panels (58), each fixed to the front face (39) of the shield (4).

9. Front-end panel assembly according to any one of claims 1 to 8, **characterised in that** the shield (4) is formed in one piece.

10. Front-end panel assembly according to any one of claims 1 to 9, **characterised in that** the upper (34) and lower (36) cross members of the shield (4) comprise at least one portion projecting in a forwards direction relative to the vertical connecting beams (38).

11. Motor vehicle comprising a chassis equipped with side struts and cradle extensions, **characterised in that** a front-end panel assembly according to any one of claims 1 to 10 is fixed to said side struts and to said cradle extensions

## Patentansprüche

1. Frontseitenmodul (1) für ein Kraftfahrzeug, des Typs, der vorgesehen ist, um an Längsträgern und Trägerverlängerungen des Fahrgestells des Kraftfahrzeugs befestigt zu sein, wobei das Modul einen Strukturrahmen (2) aus Kunststoff aufweist, der mindestens einen unteren Querträger (8) und vertikale Stützen (10, 12) aufweist, wobei jede der Stützen (10, 12) an zumindest einem Teil ihrer Höhe ein verformbares Element zum Aufnehmen von Energie (14) ausbildet, wobei das Modul ferner einen Schild (4) aus Kunststoff aufweist, der angepasst ist, um zu der Form einer Schildhülle (56) zu passen, und gegen den Strukturrahmen (2) angeordnet ist, wobei der Schild (4) einen oberen Querträger (34) und einen unteren Querträger (36) aufweist, die durch vertikale Verbindungsträger (38) aneinander angeschlossen sind, **dadurch gekennzeichnet, dass** der obere Querträger (34) und der untere Querträger (36) und die Verbindungsträger (38) eine Mehrzahl von Rippen (48) aufweisen, um in den Querträgern (34, 36) und den Trägern (38) Zellen (50) auszubilden, wobei zumindest ein Teil der Zellen (50) den Schild (4) durchquert.

2. Frontseitenmodul gemäß Anspruch 1, **dadurch gekennzeichnet, dass** es ferner zwei steife Metallplatten (16) aufweist, deren eine Seite vorgesehen ist, um an Längsträgern und Trägerverlängerungen des Fahrgestells des Kraftfahrzeugs abgestützt zu sein, wobei die vertikalen Stützen (10, 12) des Strukturrahmens (2) gegen die andere Seite der Platten (16) angeordnet sind.

3. Frontseitenmodul gemäß Anspruch 1 oder 2, **dadurch gekennzeichnet, dass** der Schild (4) zumindest einen Abschnitt aufweist, dessen Querschnitt von seiner Rückseite, die gegenüber dem Strukturrahmen (2) angeordnet ist, zu seiner Vorderseite hin eine abnehmende Steifigkeit aufweist.

4. Frontseitenmodul gemäß Anspruch 3, **dadurch gekennzeichnet, dass** die Dicke der Rippen (48) von der Rückseite des Abschnitts mit abnehmender Steifigkeit zu der Vorderseite des Abschnitts hin abnimmt.

5. Frontseitenmodul gemäß irgendeinem der Ansprüche 1 bis 4, **dadurch gekennzeichnet, dass** der obere Querträger (34) mindestens eine an der Vorderseite (39) des Schildes (4) offene Aufnahme (52) aufweist, wobei ein Schaumstoffelement (54) in der Aufnahme (52) aufgenommen ist.

6. Frontseitenmodul gemäß irgendeinem der Ansprüche 1 bis 5, **dadurch gekennzeichnet, dass** die Frontseite (39) des Schildes (4) mit einer Mehrzahl von Befestigungsmitteln versehen ist, die das Befestigen einer Schildhülle (56) und/oder von Zubehörteilen des Kraftfahrzeugs an dem Schild (4) ermöglichen.

7. Frontseitenmodul gemäß irgendeinem der Ansprüche 1 bis 6, **dadurch gekennzeichnet, dass** es eine Schildhülle (56) aufweist, die an der Vorderseite (39) des Schildes (4) befestigt ist, um dieses im Wesentlichen zu bedecken.

8. Frontseitenmodul gemäß Anspruch 7, **dadurch gekennzeichnet, dass** die Schildhülle (56) aus einer Mehrzahl von Platten (58) gebildet ist, die jeweils an der Vorderseite (39) des Schildes (4) befestigt sind.

9. Frontseitenmodul gemäß irgendeinem der Ansprüche 1 bis 8, **dadurch gekennzeichnet, dass** der Schild (4) aus einem Block gebildet ist.

10. Frontseitenmodul gemäß irgendeinem der Ansprüche 1 bis 9, **dadurch gekennzeichnet, dass** der obere Querträger (34) und der untere Querträger (36) des Schildes (4) mindestens einen Abschnitt aufweisen, der bezüglich der vertikalen Verbindungsträger (38) in Richtung nach vorne hervorsteht.

11. Kraftfahrzeug, aufweisend ein Fahrgestell, das mit Längsträgern und Trägerverlängerungen versehen ist, **dadurch gekennzeichnet, dass** ein Frontseitenmodul gemäß irgendeinem der Ansprüche 1 bis 10 an den Längsträgern und an den Trägerverlängerungen befestigt ist.
